# EUROPÄISCHE PATENTSCHRIFT

(11) **EP 0 434 796 B1**
(45) Veröffentlichungstag und Bekanntmachung des Hinweises auf die Patenterteilung: **05.05.1993**
(21) Anmeldenummer: 90909645.5
(22) Anmeldetag: 09.06.1990
(51) Int. Cl.: B24C 7/00

(54) **VORRICHTUNG ZUM STRAHLEN MIT KÖRNIGEN, FEUCHTEN STRAHLMITTELN**
DEVICE FOR BLASTING WITH A MOIST GRANULAR AGENT
DISPOSITIF DE SABLAGE AVEC DES GRANULES ABRASIFS HUMIDES

(30) Priorität: 24.06.1989 DE 8907765 U
(43) Veröffentlichungstag der Anmeldung: 03.07.1991
(73) Patentinhaber: KEIZERS, Sigrid, D-46325 Borken (DE)
(72) Erfinder: Pothmann, Reinhard, 4280 Borken 1 (DE)
(74) Vertreter: Herrmann-Trentepohl, Werner, Dipl.-Ing.
(86) Internationale Anmeldenummer: EP9000902
(87) Internationale Veröffentlichungsnummer: WO9100164

(56) Entgegenhaltungen:
- EP-A- 61 166
- EP-A- 158 743
- WO-A-84/01738
- DE-C- 34 154
- GB-A- 2 028 192
- US-A- 1 899 528

## Beschreibung

Die Erfindung betrifft eine Vorrichtung zum Strahlen mit körnigen, feuchten Strahlmitteln, bei dem einem Strahlrohr zunächst aus einem Vorratsbehälter ein Wasser-Strahlmittel -Gemisch mit relativ hohem Feuchtigkeitsgehalt unter Zuhilfenahme von Treibluft zugeführt wird.

Bei der Behandlung technischer Oberflächen, beispielsweise zur Vorbereitung auf einen nachfolgenden Farbauftrag, zur Fassadenreinigung, Entrostung oder Reinigung werden heute oft körnige oder granulatförmige Strahlmittel, etwa trockener Sand, eingesetzt, die mit Hilfe eines energiereichen Treibmittels, z. B. Luft, auf hohe Geschwindigkeit beschleunigt und auf die zu behandelnde Fläche geschleudert werden. Zur Vermeidung von umwelt-und gesundheitsbelastendem Staub wird diesen Mitteln in den letzten Jahren mehr und mehr eine Flüssigkeit, in der Regel Wasser, zugesetzt, welche gemeinsam mit dem Strahl- und Treibmittel durch einen Schlauch zur Strahldüse geleitet wird.

Bei den herkömmlichen Verfahren wurde dem Treibmittel das Strahlmittel in der Düse nach dem Injektorprinzip zugeführt. Unabdingbare Voraussetzung für ein einwandfreies Funktionieren war absolute Trockenheit des verwendeten Sandes oder Granulates bis zur Düse. Dies wiederum machte eine kostenaufwendige Aufbereitung der Strahlmittel erforderlich.

Beim Einsatz feuchter Strahlmittel, etwa Feuchtsand, entfallen die Beschaffungs- und Aufbereitungskosten und eine mehrmalige Verwendung wird möglich. Allerdings entsteht hier das Problem, den Sand so förderfähig zu machen, daß er der Düse durch Rohre oder Schläuche zugeführt werden kann. Die Aufgabe wird in der Regel dadurch gelöst, daß er in einem Behälter mit einer entsprechenden Menge Wasser in einen fließfähigen Zustand versetzt und unter Druck in den Treibmittelschlauch gepreßt wird.

Dieses Verfahren ermöglicht lange Förderwege in Verbindung mit dem obengenannten Vorteil der sehr viel geringeren Kosten und der besseren Umwelt- und Gesundheitsverträglichkeit infolge der staubfreien Verarbeitung. Gleichzeitig entsteht aber der Nachteil, daß die Fließfähigkeit des Strahlmittels mit einem hohen Zusatz an Wasser erkauft wird. Dies hat einerseits zur Folge, daß an der Arbeitsstelle lästiges Spritzwasser auftritt und in Verbindung mit Strahlmittel und abgetragenem Oberflächenmaterial zu schlammigen Rückständen und damit zu gewissen Behinderungen führt; andererseits fördert die überschüssige Wassermenge die Korrosion von Stahlteilen und verhindert ein schnelles Abtrocknen der behandelten Oberflächen und damit eine zügige Weiterbehandlung.

Aus der DE-A-34 154, von der die Erfindung ausgeht, ist bereits ein Sanddampf-Strahlgebläse bekannt, bei dem eine Wasservorabscheidung stattfindet. Dies wird dort dadurch erreicht, daß der aus Sand/Dampf bestehende Strahl durch einen Gegenstrom aus Luft geführt wird oder diesen durchkreuzt. Hierdurch soll der Dampf fortgerissen werden. Außerdem soll der Luftstrom den Sand kühlen und ihn trocknen, indem er zur Verdampfung des kondensierten Wassers Veranlassung gibt. Zum einen ist diese Art der Wasserabscheidung jedoch nur sehr unzureichend, zum anderen ist die Realisierung des Gegen- oder Kreuzstroms technisch sehr aufwendig.

Es stellt sich damit die Aufgabe, einerseits den Sand bis zum eintritt in das Treibmittelrohr mit relativ Wasserzusatz fließfähig zu halten, andererseits soll nach Austritt aus dem Strahlrohr nur noch gerade so viel Restfeuchtigkeit vorhanden sein, daß es weder durch das austretende Strahlmittel noch durch abgetragene Oberflächenpartikel zur Staubentwicklung kommen kann.

Dieses Problem wird erfindungsgemäß dadurch gelöst, daß in dem Förderkreislauf der Vorrichtung zum Strahlen mit körnigen, feuchten Strahlmittel vor der Eintrittsöffnung für das Strahlmittel eine Vorrichtung zur Abscheidung des überflüssigen Wassers vorgesehen wird. Hierbei wird die Tatsache ausgenutzt, daß Wasser oder auch jede andere Flüssigkeit spezifisch schwerer ist als Luft und in Richtung der Erdanziehungskraft durch ein im wesentlichen waagerecht angeordnetes Sieb hindurchfließen kann, das so feinmaschig ist, daß das Strahlmittel, Sand oder Granulat, zurückgehalten und mit dem Treibmittel weiterbefördert wird. Diese Methode hat aber nur Erfolg, wenn der Treib- und Strahlmittelstrom gebremst wird, da sonst infolge der hohen Geschwindigkeit der größte Teil der Flüssigkeit doch noch mitgerissen würde. Eine solche Vorrichtung muß gewährleisten, daß außer dem überschüssigen Wasser Luft, die als energielieferndes Treibmittel benötigt wird, nur in geringer Menge austreten kann und eine Verstopfung des Siebes verhindert bzw. eine Reinigungsmöglichkeit vorgesehen wird.

Ausführungsbeispiele der Erfindung sind in der Zeichnung dargestellt. Die Figuren der Zeichnung zeigen:
- Figur 1: ein erstes Ausführungsbeispiel;
- Figur 2: ein zweites Ausführungsbeispiel für einen Abscheider.

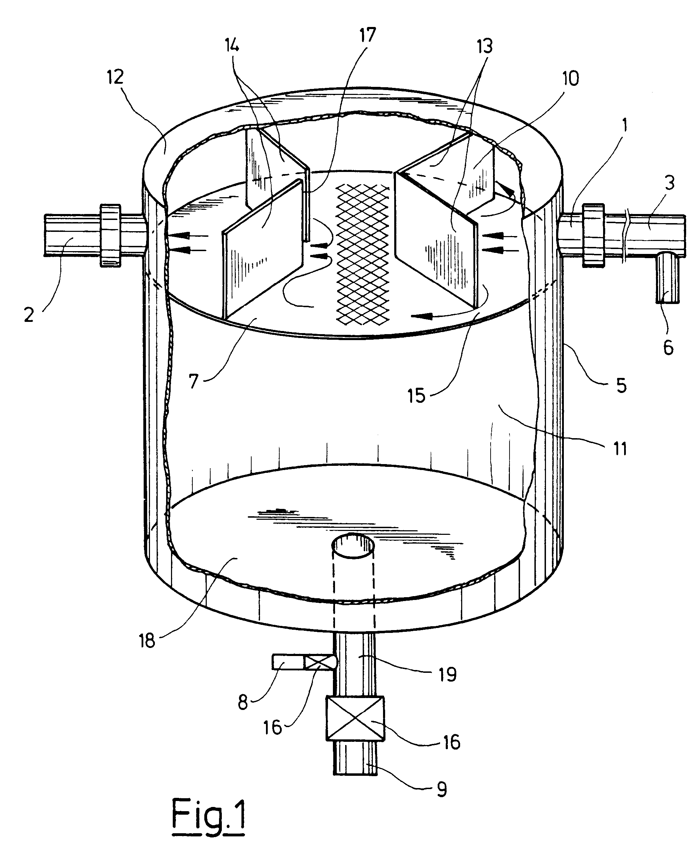

In Figur 1 ist ein Behälter 5 dargestellt, der mit einem Eingangsstutzen 1 versehen ist, an den ein Treibmittelschlauch 3 angeschlossen ist, der das Strahlmittel mit überschüssigem Wasser mit sich führt. Die Abzweigung 6 stellt die Verbindung für den nicht dargestellten Behälter für das fließfähige Strahlmittel dar, welches unter Überdruck in den Schlauch 3 gepreßt wird. Durch den Ausgangsstutzen 2 verläßt das Treibmittel mit dem entwässerten Strahlmittel den Behälter 5.

Unterhalb der Einmündung 3 bzw. des Rohrabzweigs 2 befindet sich ein Sieb 7, welches den oberen Raum 10 des Behälters 5 vom unteren Raum 11 trennt. Zwischen dem Sieb 7 und dem Behälterdeckel 12 sind Prallbleche 13 und Umlenkbleche 14 so angeordnet, daß sie das Sieb 7 und den Gehäusedeckel 12 berühren. Zwischen den Enden des Prallbleches 13 und der Innenwand des Behälters 5 befindet sich ein Spalt 15, den Treib- und Strahlmittel passieren können, während die Umlenkbleche 14 die Behälterinnenwand berühren und in ihrer Mitte einen Spalt 17 für den Medienstrom freilassen.

Im Boden 18 des Behälters 5 befindet sich ein Ablaßstutzen 19, der einen kleinen offenen Abzweig 8 und einen in der Regel durch ein Absperrventil 16 verschlossenen Ablaß 9 aufweist.

Der Ablaßstutzen 15 kann aus konstruktiven oder Platzgründen ohne Beeinträchtigung der Funktionsfähigkeit auch an der Außenwand des Behälters 5 kurz oberhalb des Behälterbodens 18 angeordnet sein.

Die Vorrichtung wird an einer beliebigen Stelle in dem Treib- und Strahlmittelschlauch waagerecht angeordnet. Beim Betrieb der Strahlanlage tritt das Treib- mit dem Strahlmittel durch den Treibmittelschlauch 3 in den Zwischenraum 10 des Behälters 5 ein, trifft auf das Prallblech 13 und wird hier zu den Spaltöffnungen 15 umgelenkt. Bei diesem Vorgang wird die überschüssige Flüssigkeit nach unten durch das Sieb abgeschieden, begünstigt dürch die wesentlich herabgesetzte Geschwindigkeit des Treibmittels, die dadurch hervorgerufen wird, daß die Querschnittsfläche des Behälters 5 um ein Vielfaches größer ist als die Querschnittsfläche des Rohres 3. Nach Passieren der Spaltöffnungen 15 wiederholen sich die Vorgänge Aufprallen und Umlenken an den Umlenkblechen 14, und der Treib- und Strahlmittelstrom verläßt den Behälter durch den Spalt 17 und den Ausgangsstutzen 2.

Es hat sich herausgestellt, daß sich beim Betrieb der Vorrichtung über dem Sieb vor allem in der Hohle des Prallbleches 13 und in den Ecken zwischen den Umlenkblechen 19 und der Behälterinnenwand eine dünne Strahlmittelschicht aufbaut, die sich aber nicht weiter verstärkt und wasserdurchlässig bleibt. Das abgeschiedene Wasser fällt zum Behälterboden und verläßt mit einer geringen Menge Luft und feinkörnigen Strahlmittelteilchen, die das Sieb ebenfalls passieren konnten, den Behälter durch den offenen Abzweig 8.

Im Hohlraum zwischen Behälterboden 18 und Sieb 7 bildet sich ein Luftpolster, welches zur Reinigung des Siebes 7 herangezogen werdenkann. Derartige Strahlanlagen besitzen nämlich aus Sicherheitsgründen eine Einrichtung, die den Strahlschlauch, der oft sehr lang ist und damit ein großes Volumen besitzt, schnell in einen drucklosen Zustand versetzenkann. Bei dieser Schnellabschaltung entspannt sich ebenfalls das Luftpolster in dem Behälterraum 11 durch das Sieb 7 nach oben, so daß die Strahlmittelablagerung hoch- und durch den Luftstrom mitgerissen wird.

Bei Verwendung von feinkörnigen Strahlmitteln kann es nach längerer Betriebszeit vorkommen, daß die Ablagerungen über dem Sieb fest und fast wasserundurchlässig werden. Für diesen Fall besitzt der Ablaßstutzen 19 einen in der Regel durch ein Ventil 16 verschlossenen Ausgang 9, der im Bedarfsfall geöffnet und durch den Wasser oder Luft in den Behälter und durch das Sieb gepreßt werden kann. Durch diesen Wasser- oder Luftstrom werden die Ablagerungen gelöst und durch die Stutzen 3 und 2, nachdem die Strahlschläuche entfernt wurden, wegtransportiert.

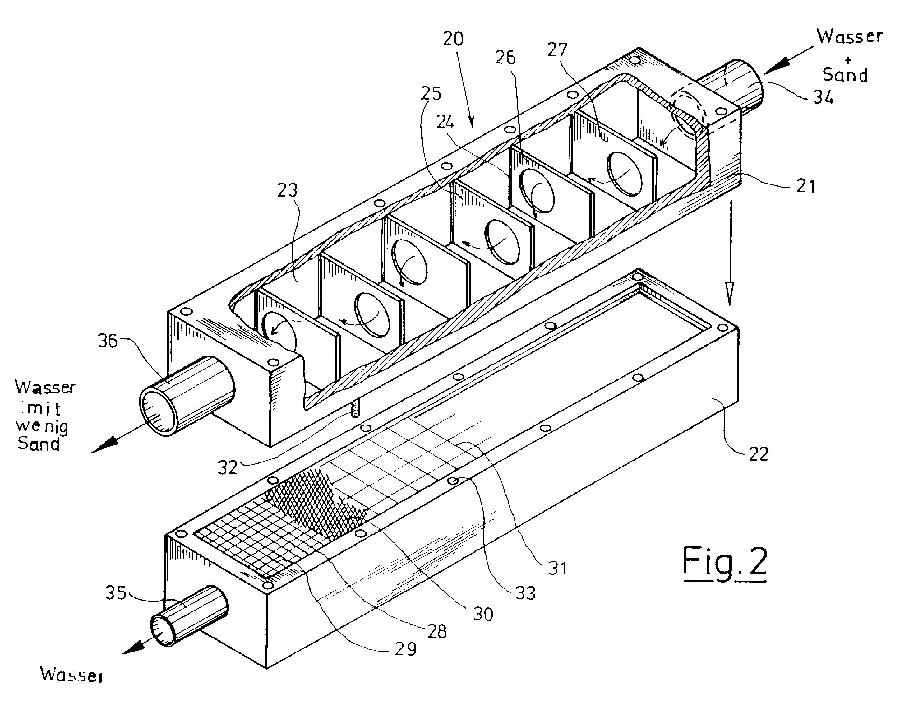

In Figur 2 ist eine zweite Ausführungsform dargestellt. Der Abscheider 20 gemäß Figur 2 ist in auseinandergezogener Darstellung gezeichnet. Er besteht aus einem zweiteiligen, länglichen Gehäuse mit den Teilen 21 und 22. Der obere Teil 21 des Gehäuses wird von einem nach unten offenen Kanal 23 eingenommen, der nach allen Seiten geschlossen ist, mit Ausnahme seiner Bodenseite, die nach unten offen ist. In den Kanal 23 sind in entsprechenden Stecknuten 24, die auf beiden Seiten des Kanals angebracht sind, quer zur Stromerstreckung Prallbleche 25, 26 eingebaut, die jeweils den gesamten Querschnitt des Kanals 23 ausfüllen. Um das Durchströmen des Mediums Wasser plus Sand zu ermöglichen, sind die Prallbleche mit Perforationen 27 versehen, in diesem Falle runden Bohrungen mit etwa 30 mm Durchmesser, die entlang des Stromes im Kanal versetzt angeordnet sind, so daß der Strom jeweils scharfe Umlenkungen vollführen muß. Dies verlangsamt den Strom wesentlich, so daß der größte Teil des Wassers nach unten ablaufen kann. Der untere Teil des Gehäuses 22 ist als offener Trog ausgebildet, der an seiner Oberseite, die Kontakt mit dem Oberteil 21 hat, mit einem geschichteten Sieb 28 abgedeckt ist. Das Sieb besteht aus mehreren Schichten, nämlich zunächst einem Grobsieb 29, einem darunterliegenden Feinsieb 30 und einem Siebträger 31, die auf einen Absatz innerhalb des unteren Gehäuseteiles aufgelegt sind. Der obere kann auf den unteren Gehäuseteil mit Hilfe von Bolzen 32 verschraubt werden, die in entsprechende Gewindebohrungen 33 kompatibel eindrehen. Das Wasser plus Sand-Gemisch mit einem hohen Anteil Wasser gelangt durch einen Stutzen 34 in den Kopfteil 21 des Gehäuses und wird durch die Prallbleche 25, 26 abgebremst. Der größte Teil des Wassers wird aufgrund der Schwerkraft in den unteren Teil 22 einlaufen und über den Stutzen 35 abgeführt. Der Sand mit wenig Wasser, so daß gerade noch seine Fließfähigkeit gewährleistet ist, wird über einen weiteren Stutzen 36 dem Strahlrohr zugeführt. Das Gehäuse ist ausgelegt, so daß der Fluß unter Zuhilfenahme der Treibluft gewährleistet ist. Die Luft geht nicht in den unteren Teil des Gehäuses, sondern verbleibt im oberen Teil und gewährleistet, daß der angetriebene Sand der Düse zugeführt wird. Anstelle der querliegenden Prallbleche können auch andere, gegebenenfalls mit Spalten oder anderen Perforationen vorgesehen werden. Beide Ausführungsformen eignen sich zur Lösung der eingangs genannten Aufgabe, wobei der Rahmen der Erfindung durch die Ansprüche abgesteckt ist.

## Patentansprüche

1. Vorrichtung zum Strahlen mit körnigen, feuchten Strahlmitteln, bei der einem Strahlrohr zunächst aus einem Vorratsbehälter ein Wasser-Strahlmittel-Gemisch mit relativ hohem Feuchtigkeitsgehalt unter Zuhilfenahme von Treibluft zugeführt wird, wobei dem Strahlrohr ein Flüssigkeitsabscheider (20) vorgeschaltet ist, dadurch gekennzeichnet, daß der Flüssigkeitsabscheider (20) in einem Kopfraum mit einem Eingang für das Wasser-Strahlmittel-Gemisch und einem Ausgang für das entfeuchtete Strahlmittel und unterhalb der Ein- und Ausgänge mit einem Sieb (7, 28) versehen ist, das das Strahlmittel zurückhält, das Wasser aber durchläßt und daß sich im Kopfraum Prallbleche (13; 25, 26) und/oder Umlenkbleche (14) befinden.

2. Vorrichtung nach Anspruch 1, dadurch gekennzeichnet, daß sich zwischen den Enden der Prallbleche (13) und der Innenwand des Kopfraumes ein Spalt (15) und/oder zwischen den Umlenkblechen ein Spalt (17) vorhanden ist.

3. Vorrichtung nach den Ansprüchen 1 oder 2, dadurch gekennzeichnet, daß im Boden (18) des Behälters (5) ein Ablaßstutzen (19) angeordnet ist, der einen Abzweig (8) für den Wasseraustritt und ein Absperrventil (16) mit einem Anschlußstutzen (9) für die Zufuhr von Flüssigkeit oder Luft für Reinigungszwecke aufweist.

4. Vorrichtung nach Anspruch 1, dadurch gekennzeichnet, daß der Abscheider ein längliches, zweiteiliges Gehäuse umfaßt, dessen oberer Teil (21, Kopfraum) ein mit Prall- und Umlenkblechen (25, 26) bestückter Kanal (23) aufweist, der nach unten offen ist und mit einem Sieb (28) gegenüber dem unteren Teil (22) des Gehäuses getrennt ist, und das im Kopfraum (21) die Eingänge und Ausgänge für das Strahlmittel-Wasser-Gemisch (34, 36) umfaßt, während der untere Teil (22) mit einem Auslauf (35) für das abgetrennte Wasser versehen ist.

5. Vorrichtung nach Anspruch 4, dadurch gekennzeichnet, daß die Prallbleche (25, 26) mit einer Perforation (27) versehen sind, wobei über den Stromweg das Wasser-Strahlmittel-Gemisch die Perforationen (27) in den einzelnen Prallblechen gegeneinander versetzt sind.

6. Vorrichtung nach Anspruch 4 und 5, dadurch gekennzeichnet, daß das Sieb (28) aus einem hintereinandergeschalteten Grob- und einem Feinsieb (29; 30) besteht.

## Claims

1. Device for blasting grained wet blasting agents, in which a mixture of water and blasting agent having a relatively high content of moisture is supplied from a storage container to a blasting tube by means of propellant air, a liquid separator (20) being superposed to the basting tube, **characterized in that** the liquid separator (20) is provided, in a head part, with an entry for the mixture of water and blasting agent and an exit for the dehumidified blasting agent and, below the entries and the exits with a screen (7,28), retaining the blasting agent but letting pass the water, and **that** in the head region there are provided impact plates (13;25,26) and/or deflectors (14).

2. Device according to claim 1, **characterized in that** a gap (15) is provided between the ends of the impact plates (13) and the interior wall of the head region and/or a gap (17) is provided between the deflectors.

3. Device according to claims 1 or 2, **characterized in that** in the bottom (18) of the container (5) a discharging connection (19) is provided which presents a branch (8) for the discharging of water and a stop valve (16) having a connecting branch (9) for the supply of liquid or air for cleaning purposes.

4. Device according to claim 1, **characterized in that** the separator comprises an oblong two-part casing, whose upper part (21, head region) is provided with a channel (23) having impact plates and deflectors (25,26),the channel being open at the bottom and being separated by a screen (28) from the lower part (22) of the casing, the casing comprising in the head region (21) the entries and exits for the mixture of blasting agent and water (34,36), while the lower part (22) is provided with a spout (35) for the separated water.

5. Device according to claim 4, **characterized in that** the impact plates (25,26) have perforations (27), the perforations (27) of the different impact plates being staggered along the current path of the mixture of blasting agent and water.

6. Device according to claims 4 and 5, **characterized in that** the screen (28) comprises a coarse screen and a fine screen (29;30) connected in series.

## Revendications

1. Dispositif pour le sablage avec des agents de sablage granuleux et humides, dans lequel un mélange eau-agent de sablage ayant une teneur en humidité rélativement élevée est amené - à partir d'un réservoir - à une tuyère de sablage à moyen d'air propulseur, un séparateur de liquide (20) étant placé en amont de la tuyère de sablage, **charactérisé en ce que** le séparateur de liquide (20) est muni, dans une région tête, d'une entrée pour le mélange eau-agent de sablage et d'une sortie pour l'agent de sablage déshumidifié et, au-dessous des entrées et sorties, d'un tamis (7,28) retenant l'agent de sablage, mais laissant passer l'eau, **et que** la région tête comprend des chicanes (13;25,26) et/ou des deflecteurs (14).

2. Dispositif selon la revendication 1, **charactérisé en ce qu'**une fente (15) se trouve entre les extremités des chicanes (13) et la paroi interne de la région tête (15) et/ou une fente (17) se trouve entre les déflecteurs.

3. Dispositif selon les revendications 1 ou 2, **characterisé en ce qu'**une tubulure de vidange (19) est placée dans le fond (18) du réservoir (5), la tubulure présentant un branchement (8) pour la sortie de l'eau et une soupape d'arrêt (16) munie d'une tubulure de raccordement (9) pour l'alimentation en liquide ou en air pour le nettoyage.

4. Dispositif selon la revendication 1,**charactérisé en ce que** le séparateur comprend un boîtier oblong en deux pièces, dont la partie supérieur (21, région tête), présente un canal (23) muni de chicanes et de déflecteurs (25,26), qui est ouvert vers le bas et qui est séparé par un tamis (28) de la partie inférieur (22) du boîtier, et le boîtier comprenant, dans la région tête (21), les entrées et sorties de la mélange agent de sablage-eau (34,36), tandis que la partie inférieur (22) est munie d'une orifice de décharge (35) de l'eau séparée.

5. Dispositif selon la revendication 4, **charactérisé en ce que** les chicanes (25,26) présentent des perforations (27), les perforations (27) des différents chicanes étant décalées sur le long du parcours du courant de la mélange eau-agent de sablage.

6. Dispositif selon les revendications 4 et 5, **charactérisée en ce que** le tamis (28) comprend un tamis gros et un tamis fin (29;30) montés en série.
